Europäisches Patentamt

European Patent Office

Office européen des brevets

(11) Numéro de publication: **0 335 043**
**A1**

(12) **DEMANDE DE BREVET EUROPEEN**

(21) Numéro de dépôt: 88400665.1

(22) Date de dépôt: 21.03.88

(51) Int. Cl.4: **C02F 5/00 , C02F 5/02 , C02F 1/64**

(43) Date de publication de la demande:
04.10.89 Bulletin 89/40

(84) Etats contractants désignés:
AT BE CH DE ES FR GB GR IT LI LU NL SE

(71) Demandeur: Leroy, Martine
1, rue des Platanes
F-94600 Choisy-le-Roi(FR)

(72) Inventeur: Leroy, Martine
1, rue des Platanes
F-94600 Choisy-le-Roi(FR)

(54) **Procédé et dispositif utilisant ce procédé pour adoucir l'eau, fournie par le reseau de distribution publique ou de toute autre origine, avant son utilisation.**

(57) L'invention concerne un procédé et un dispositif d'adoucissement de l'eau.

Le procédé de l'invention consiste à aérer l'eau et à chauffer, afin de précipiter rapidement le carbonate de calcium dissous jusque'à une dureté carbonatée inférieure à 6 degrés français. Les seuls réactifs nécessaires à cet adoucissement sont l'air comprimé (fournie par un compresseur par exemple) et l'énergie calorifique. L'eau aérée perd son gaz carbonique et tend à précipiter $CaCO_3$. Le chauffage accélère cette précipitation.

L'invention s'applique à toutes les eaux présentant une dureté carbonatée supérieure à 6 degrés français.

REACTEUR

FIG. 1

EP 0 335 043 A1

## Procédé et dispositif utilisant ce procédé pour adoucir l'eau, fournie par le reseau de distribution publique ou de toute autre origine, avant son utilisation.

La présente invention a pour objet un procédé et un dispositif utilisant ce procédé pour adoucir l'eau, fournie par le réseau de distribution publique ou de toute autre origine, avant son utilisation.

Actuellement les dispositifs utilisés le plus couramment sont les adoucisseurs mettant en oeuvre des résines échangeuses d'ions. D'autres dispositifs consistent à ajouter à l'eau de la chaux ou de la soude. Ces derniers dispositifs sont souvent réservés à des usages industriels. Les adoucisseurs utilisant des résines échangeuses d'ions utilisent les propriétés desdites résines qui fixent les ions calcium, magnésium et autres alcalinoterreux en libérant des quantités équivalentes d'ions sodium. Ces résines doivent être régénérées périodiquement en les mettant en contact avec une solution très concentrée (pratiquement saturée) de chlorure de sodium. Pendant cette régénération les ions sodium de la saumure sont fixés sur les résines à la place des ions calcium qui sont libérés dans cette saumure.

Les inconvénients de ces dispositifs sont les suivant :

- Nécessité de régénérer périodiquement l'appareil et de mettre en oeuvre à cet effet des quantités importantes de sel.

- L'eau, une fois adoucie, conserve une minéralisation voisine de celle qu'elle avait avant adoucissement. Dépourvue de son calcium, l'eau ne peut plus former sur les parois des conduites un dépôt, même mince, de carbonate de calcium protégeant les conduites. La corrosivité de l'eau est fortement accrue par ce procédé et peut entraîner le percement des conduites situées à l'aval. Une addition de composés inhibiteurs de corrosion est alors nécessaire. La corrosion peut être très importante lorsque l'eau adoucie est laissée en contact avec l'atmosphère dans un appareil métallique. Des dépôts salins peuvent se former, entraînant l'attaque de métal.

- Les ions libérés dans l'eau du fait de la corrosion peuvent présenter une certaine toxicité, notamment lorsque les parties métalliques sont constituées d'acier allié "inoxydable" ou d'acier galvanisé.

Les procédés utilisant une introduction de chaux ou de soude conduisent à la précipitation de carbonate de calcium à partir des ions bicarbonates et calcium présents dans l'eau ou éventuellement ajoutés. L'eau est ensuite débarrassée du carbonate de calcium en suspension par une filtration. Ces procédés sont tels qu'après filtration la réaction de précipitation n'est pas achevée, de sorte que de carbonate de calcium peut encore précipiter si l'on ne prend la précaution d'ajouter à l'eau une quantité d'acide suffisante pour la mettre à l'équilibre calcocarbonique ou la rendre agressive

Ce procédé nécessite la mise en oeuvre de réactifs éventuellement difficiles à dissoudre (cas de la chaux). Ceci suppose des installations compliquées, une surveillance et un entretien importants. Ainsi ces procédés sont souvent réservés à une production industrielle d'eau adoucie.

La présente invention a pour objet l'adoucissement de l'eau par un procédé mettant en oeuvre une aération de l'eau éventuellement réchauffée. Par ce procédé l'eau est adoucie à une valeur de 2 à 5 degrés français de dureté carbonatée. Ce procédé conduit à une déminéralisation partielle de l'eau. Les caractéristiques de celle-ci sont telles que cette eau reste légèrement calcifiante durant son transport dans les canalisations, mais devient légèrement agressive lorsqu'elle est mise en contact avec l'atmosphère. Ainsi les canalisations placées à l'aval de l'appareil seront protégées contre la corrosion sans qu'un entartrage important ne prenne naissance. Si l'eau est utilisée en pulvérisation, l'obturation des gicleurs ne sera pas possible puisqu'au contact de l'air l'eau deviendra agressive et ne pourra donc former de dépôts calcaires.

Au cours du traitement, l'eau s'appauvrit en ions calcium et en ions bicarbonate seuls responsables de l'entartrage. La concentration en ions magnésium n'est pas modifiée.

Le principe du procédé repose sur les considérations suivantes :

- L'air atmosphérique est pauvre en gaz carbonique (pression partielle $3/10000^\circ$ bar)

- La concentration du $CO_2$ dissous dans l'eau en équilibre avec le $CO_2$ atmosphérique est faible et décroit à mesure que la température de l'eau s'élève.

- Les eaux dures présentent toutes une teneur en $CO_2$ dissous supérieure à la concentration d'équilibre avec l'atmosphère.

- Lorsque la dureté carbonatée d'une eau est supérieure à une valeur d'environ 5 degrés français, la mise en équilibre avec le $CO_2$ atmosphérique conduit à rendre cette eau calcifiante et même suffisamment calcifiante pour que du carbonate de calcium solide apparaisse spontanément au sein du liquide, entraînant un adoucissement de l'eau.

- Lorsque la dureté carbonatée d'une eau est inférieure à environ 5 degrés français, la mise à l'équilibre avec le $CO_2$ atmosphérique conduit à rendre l'eau agressive.

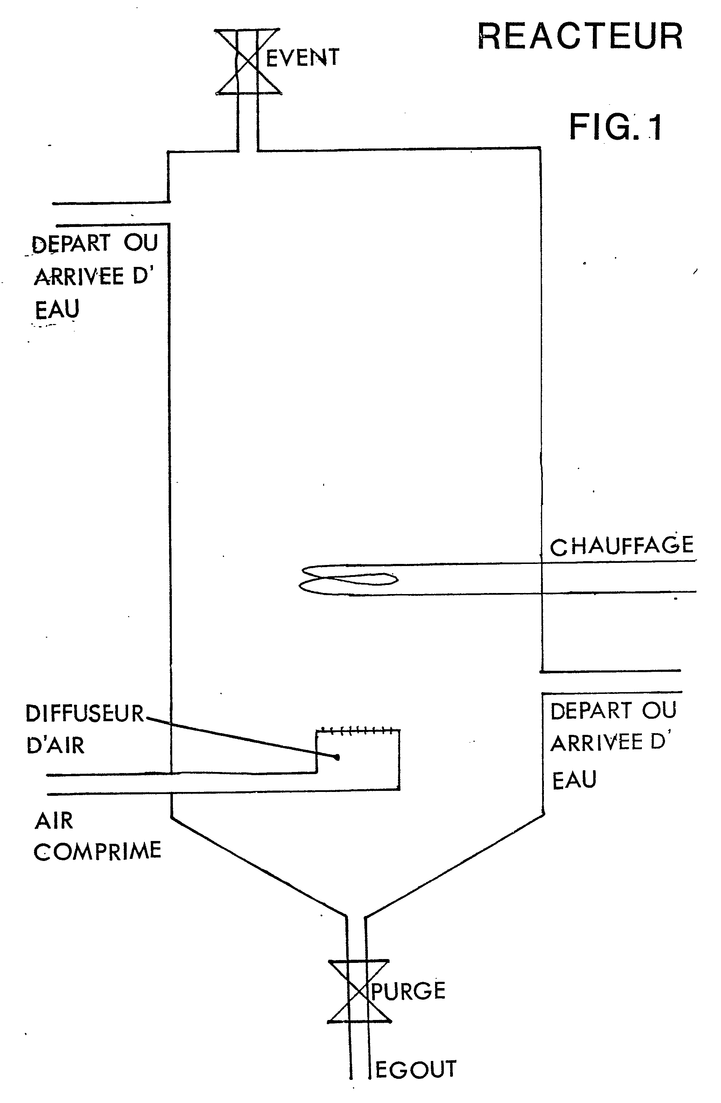

Le procédé consiste donc à aérer l'eau et à la chauffer jusqu'à une température comprise entre 30° et 80°. Le pH de l'eau s'élève alors, entraînant la précipitation du carbonate de calcium. Celui-ci apparaît sous forme d'une multitude de petits cristaux de calcite ou d'aragonite qui res tent en suspension dans l'eau pendant toute la durée de l'aération. Ces cristaux grossissent du fait de la précipitation du $CaCO_3$. Le débit d'air nécessaire à l'aération est fonction du volume d'eau à traiter et de la géométrie du réacteur, il est nécessairement très grand par rapport au volume d'eau. Après une aération suffisante une période de repos permet au carbonate de calcium suspendu de se déposer au fond du réacteur (Fig. 1).

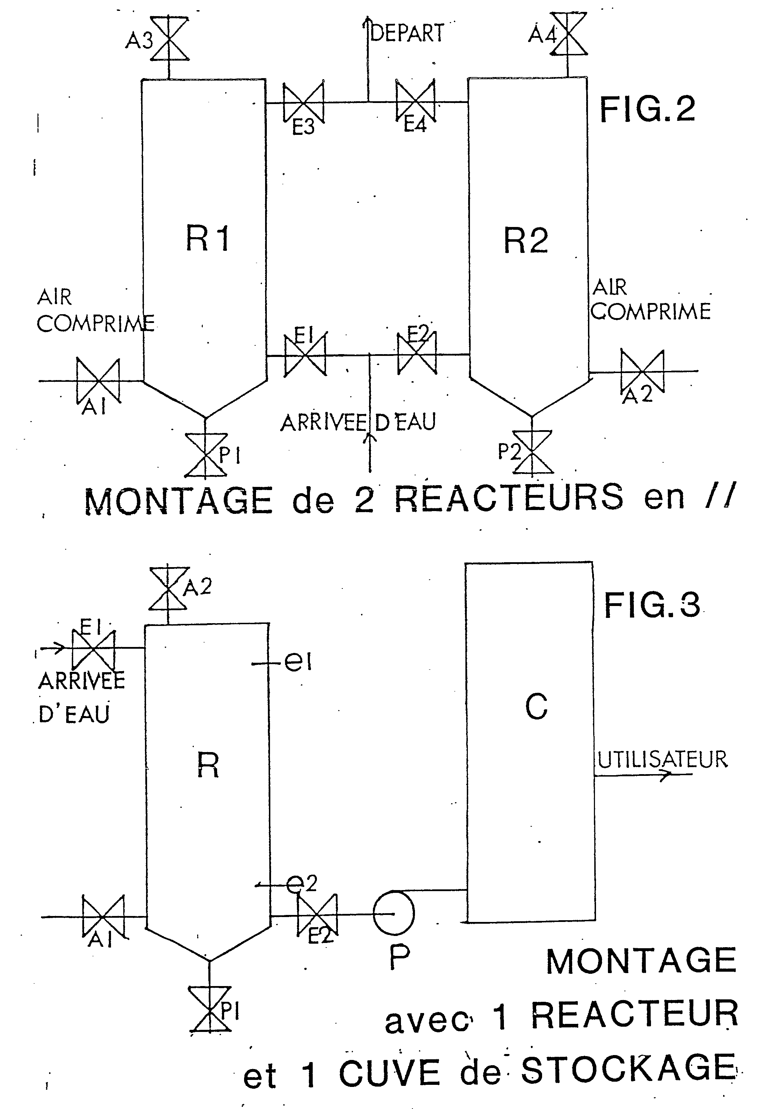

On ferme ensuite les communications entre le réacteur et l'atmosphère et l'on met le réacteur en communication avec le réseau amont d'alimentation et le réseau aval d'utilisation (Fig. 2). On peut aussi transvaser l'eau, à l'aide d'une pompe, dans un récipient sous pression afin d'être utilisée (Fig. 3).

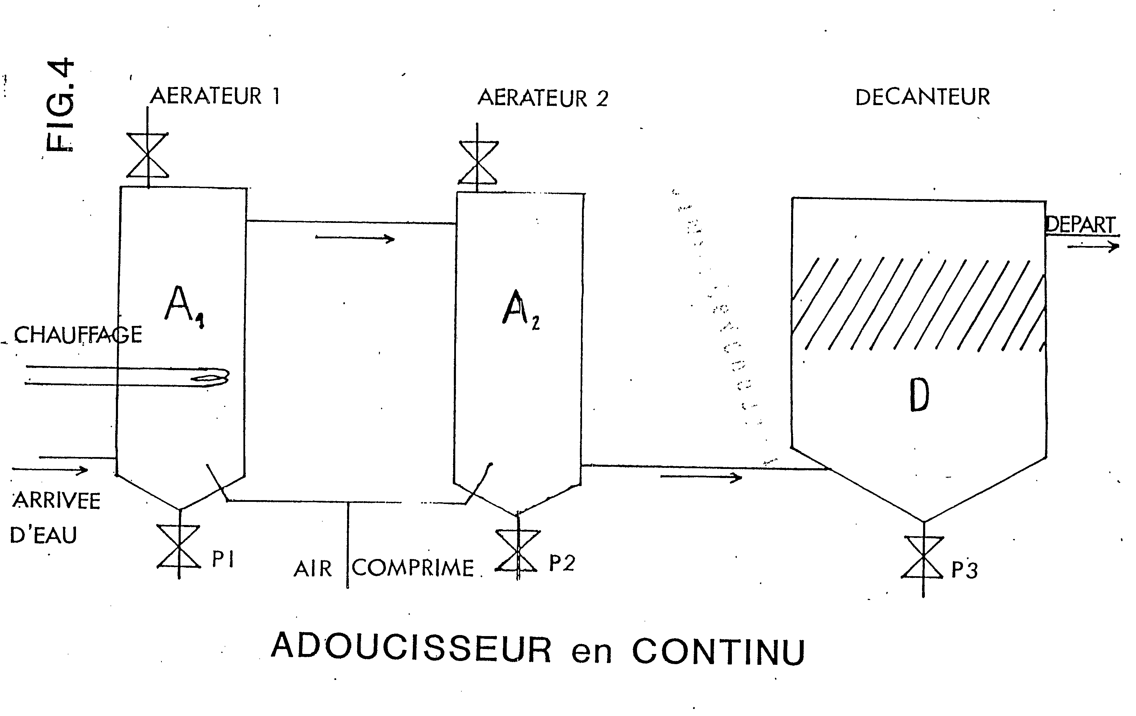

Il s'agit ici d'une préparation discontinue d'eau adoucie. On peut aussi utiliser ce dispositif en préparation continue en disposant d'amont en aval une cuve d'aération et de chauffage, une seconde cuve d'aération puis une cuve de décantation. Une partie des boues décantées peut être réinjectée dans la première cuve (Fig 4).

On décrira maintenant un exemple de dispositif permettant de produire de l'eau adoucie en se référant aux figures I et III. Ici le dispositif comprend un réacteur R, une pompe de transfert P et une cuve C sous pression reliée au circuit d'utilisation.

L'eau est introduite dans le réacteur par surverse. L'électrovanne de remplissage étant commandée par le niveau de l'eau dans le réacteur. La détection du niveau peut être effectuée à l'aide d'électrodes ou tout autre appareil (pressostat, sonde ultrason, etc...). On injecte ensuite de l'air par les buses situées à la partie inférieure puis on chauffe à l'aide d'une résistance électrique ou d'un primaire d'eau chaude jusqu'à la température optimale de précipitation (selon le type d'eau cette température peut varier entre 30° et 80° C). Lorsque la température est atteinte, l'injection d'air se poursuit pendant 1/2 à 1 heure, afin de pousser la précipitation de $CaCO_3$ jusqu'a la valeur souhaitée. Une phase de décantation de 1 à 2 heures permet ensuite de séparer les particules de $CaCO_3$ de l'eau. L'eau est ensuite transférée dans la cuve sous pression (C) à l'aide de la pompe (P). L'arrêt de la pompe et la commande de l'électrovanne d'aspiration sont asservis au niveau de l'eau dans le réacteur. Ils sont également asservis au niveau d'eau dans la cuve sous pression. Lorsque celle-ci est pleine, le transfert s'arrête et la production d'eau adoucie est stoppée.

L'ensemble des diverses phases du traitement est piloté par un programmeur cyclique ou un appareil électronique qui commande l'ouverture et la fermeture des électrovannes, la mise sous tension du chauffage et de la pompe. Il assure aussi le contrôle des niveaux dans les appareils.

## Revendications

1 - Procédé d'adoucissement de l'eau mettant en oeuvre une aération importante et un chauffage suivi éventuellement d'un refroidissement. Ce procédé consiste en la préparation discontinue d'eau adoucie à une dureté carbonatée non nulle mais inférieure à 6 degrés français. L'adoucissement visé consiste à précipiter le carbonate de calcium dissous dans l'eau par évasion du gaz carbonique dissous. Cette évasion est obtenue par injection d'air dans l'eau à traiter. L'accélération de la précipitation est obtenue par chauffage. L'élimination du $CaCO_3$ précipité est obtenue par simple décantation.

2 - Dispositif d'adoucissement de l'eau mettant en oeuvre une aération et un chauffage suivi éventuellement d'un refroidissement. Ce dispositif peut être composé d'un réacteur (R), d'une pompe (P) et d'une cuve en pression (C).

3 - Dispositif d'adoucissement de l'eau mettant en oeuvre une aération et un chauffage suivi éventuellement d'un refroidissement. Dispositif composé de deux réacteurs ($R_1$ et $R_2$) montés en parallèle et alimentés par le réseau d'eau froide et raccordé au circuit d'utilisation.

4 - Dispositif d'adoucissement de l'eau en continu comprenant deux cuves d'aération ($A_1$ et $A_2$) en série, la première étant munie d'un dispositif de chauffage et comprenant une troisième cuve (D) permettant la séparation du carbonate de calcium solide.

REACTEUR

FIG. 1

EVENT

DEPART OU ARRIVEE D' EAU

CHAUFFAGE

DIFFUSEUR D'AIR

DEPART OU ARRIVEE D' EAU

AIR COMPRIME

PURGE

EGOUT

EP 0 335 043 A1

FIG.2

MONTAGE de 2 REACTEURS en //

FIG.3

MONTAGE avec 1 REACTEUR et 1 CUVE de STOCKAGE

FIG.4

AERATEUR 1    AERATEUR 2    DECANTEUR

DEPART

CHAUFFAGE    $A_1$    $A_2$    D

ARRIVEE
D'EAU

P1    AIR COMPRIME    P2    P3

EP 0 335 043 A1

ADOUCISSEUR en CONTINU

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 585 697 (M. LEROY) <br> * En entier * <br> ----- | 1-4 | C 02 F 5/00 <br> C 02 F 5/02 <br> C 02 F 1/64 |

| | | | DOMAINES TECHNIQUES RECHERCHES (Int. Cl.4) |
|---|---|---|---|
| | | | C 02 F |

Le présent rapport a été établi pour toutes les revendications

| Lieu de la recherche | Date d'achèvement de la recherche | Examinateur |
|---|---|---|
| LA HAYE | 27-10-1988 | VAN AKOLEYEN H.T.M. |

EPO FORM 1503 03.82 (P0402)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant